# EUROPÄISCHE PATENTSCHRIFT

(11) **EP 2 637 909 B1**
(45) Veröffentlichungstag und Bekanntmachung des Hinweises auf die Patenterteilung: **07.01.2015**
(21) Anmeldenummer: 11779660.7
(22) Anmeldetag: 08.11.2011
(51) Int. Cl.: B61L 25/02, G01C 7/04, B61L 3/00

(54) **VERFAHREN ZUR HÖHENPROFILBESTIMMUNG EINER FAHRSTRECKE EINES SCHIENENFAHRZEUGS**
METHOD FOR DETERMINING THE ELEVATION PROFILE OF A RAILWAY LINE
PROCÉDÉ DE DÉTERMINATION DU PROFIL D'ALTITUDE D'UN TRAJET FERROVIAIRE

(30) Priorität: 10.11.2010 DE 102010050899
(43) Veröffentlichungstag der Anmeldung: 18.09.2013
(73) Patentinhaber: KNORR-BREMSE Systeme für Schienenfahrzeuge GmbH, 80809 München (DE)
(72) Erfinder: NOCK, Marco, 85622 Feldkirchen (DE); BÜHLER, Joachim, 80797 München (DE); HEINE, Christoph, 80995 München (DE)
(86) Internationale Anmeldenummer: PCT/EP2011/069592
(87) Internationale Veröffentlichungsnummer: WO 2012/062723

(56) Entgegenhaltungen:
- WO-A1-02/08042
- WO-A1-2010/017887
- WO-A1-2010/083946
- US-A1- 2010 131 185
- WINTER J ET AL: "Fahrerassistenz-System", SIGNAL + DRAHT, TELZLAFF VERLAG GMBH. DARMSTADT, DE, Bd. 101, Nr. 10, 1. Oktober 2009 (2009-10-01), Seiten 6-10,12, XP001548183, ISSN: 0037-4997

## Beschreibung

Die vorliegende Erfindung betrifft ein Verfahren zur Höhenprofilbestimmung einer Fahrstrecke eines Schienenfahrzeugs sowie ein Verfahren zum Betreiben eines Fahrerassistenzsystems eines Schienenfahrzeugs.

Solche im Schienenverkehr eingesetzten Fahrerassistenzsysteme dienen in erster Linie dazu, ein Schienenfahrzeug, beispielsweise einen Personen- oder Güterzug, in möglichst energieeffizienter Weise über eine Fahrstrecke zu bewegen. Dazu werden dem Fahrer eines solchen Schienenfahrzeuges über eine Anzeige des Fahrerassistenzsystems die dazu notwendigen Informationen zur Verfügung gestellt. Diese Informationen beinhalten beispielsweise ein Streckenprofil mit einer Darstellung von zulässigen Höchstgeschwindigkeiten sowie der empfohlenen Geschwindigkeiten, Empfehlungen für geeignete Traktions- und Bremshebelstellungen sowie Angaben zum topografischen Verlauf der Strecke. Daher ist es wichtig, über möglichst genaue Daten der Fahrstrecke zu verfügen. Eine wichtige benötigte Information ist das Höhenprofil der Fahrstrecke, aus der die auf das Schienenfahrzeug wirkende Hangabtriebskraft berechnet wird, welche sodann in die Berechnungen zur Ausgabe von Fahrempfehlungen durch das Fahrerassistenzsystem einfließt.

Die Güte der von dem Fahrerassistenzsystem betroffenen Annahmen zur Berechnung von Fahrempfehlungen stehen in direkter Korrelation mit der Qualität dieser Fahrstreckendaten, da bereits geringe Steigungsänderungen von nur 1‰ enorme Abweichungen zwischen dem der Berechnung zugrunde liegenden Modell und der Realität verursachen und somit eine qualifizierte Prognose über den weiteren Verlauf der Fahrt erschweren.

Solche Informationen über das Höhenprofil (Gradient) einer Fahrstrecke können in den meisten Fällen direkt bei den Fahrstreckenbetreibern erfragt werden. Die von diesen erhaltenen Daten sind allerdings meist von unbekannter Herkunft und Qualität, oft veraltet und nicht in digitaler Form

verfügbar. Die Genauigkeit dieser Daten ist sehr schwer zu bewerten und ihre generelle Richtigkeit ist nicht gewährleistet. Überdies müssen die Daten in das Fahrerassistenzsystem manuell eingegeben und ggfs. weiterbearbeitet werden, so dass auch der zeitliche Aufwand zur Eingabe der Daten in das Fahrerassistenzsystem sehr hoch ist.

So ist aus der WO 2010/083946 A1 ein Verfahren zur Erfassung von Streckendaten bekannt, bei dem auf Basis von satellitengestützt generierten Daten erfasste Positionsdaten Rasterpunkten zugeordnet werden und für die Rasterpunkte anschließend aus einer vorhandenen Höhendatenbank die geographische Höhe der einzelnen Rasterpunkte ermittelt werden.

Aufgabe der vorliegenden Erfindung ist es daher, ein Verfahren zur Höhenprofilbestimmung einer Fahrstrecke bereit zu stellen, die ermöglicht, dass Höhenprofil beliebiger Bahnstrecken sehr genau, schnell und unabhängig von Land und Betreiber zu erfassen, um den individuellen Anpassungsaufwand für die Datenerfassung bei neuen Strecken so gering wie möglich zu halten und die Leistungsfähigkeit des Fahrerassistenzsystems zu steigern.

Diese Aufgabe wird durch ein Verfahren zur Höhenprofilbestimmung einer Fahrstrecke mit den Merkmalen des Anspruchs 1 sowie durch ein Verfahren zum Betreiben eines Fahrerassistenzsystems mit den Merkmalen des Anspruchs 9 gelöst.

Erfindungsgemäß wird das Höhenprofil einer Fahrstrecke dadurch bestimmt, dass die Erfassung von Positions- und Höhendaten durch einen im Schienenfahrzeug installierten Empfänger eines globalen Navigationssatellitensystems (GNSS) bei mindestens einmaligen Abfahren der Fahrstrecke erfolgt, wobei zur Erhöhung der Genauigkeit der über das GNSS enthaltenen Höhendaten die Trägerphase der Signale des oder der Navigationssatelliten bestimmt wird und das die Höhendaten unter Zuhilfenahme eines RTK-Netzwerkes einer differenziellen Korrektur unterzogen werden und das der Höhenprofilverlauf der Fahrstrecke in einem weiteren Verfahrensschritt durch Verarbeitung der in den vorangegangenen Schritten erfassten Positions- und Höhendaten berechnet wird. Durch das Mitführen einer solchen Empfängereinheit in dem Schienenfahrzeug, mit welchem die Fahrstrecke abgefahren wird, deren Gradientenverlauf bestimmt werden soll, ist ein einfach und schnell durchführbares Verfahren bereit gestellt, mit der der Gradientenverlauf einer beliebigen Strecke unabhängig von Betreibern oder Ländern bestimmt werden kann. Das Verfahren ist schnell durchführbar und liefert eine deutlich höhere Genauigkeit, als es mit konventionellen GNSS-Messungen ermöglicht ist. Die schnelle, hochgenaue und vorallem verlässliche Erfassung des Höhenprofils ist der große Vorteil dieses Verfahrens.

In einer vorteilhaften Ausführungsvariante des erfindungsgemäßen Verfahrens wird die Genauigkeit der über das GNSS enthaltenen Höhendaten durch Berücksichtigung der Geoidundulation weiter erhöht. Mit einer solchen Datenkorrektur kann die tatsächliche physikalische Höhe bestimmt werden, welche für die Berechnung der potenziellen Energie des die Fahrstrecke abfahrenden Zuges ausschlaggebend ist.

Gemäß einer weiteren vorteilhaften Ausführungsvariante des erfindungsgemäßen Verfahrens werden die Positions- und Höhendaten zumindest auf einer Teilstrecke der Fahrstrecke bei unterschiedlichen Fahrtrichtungen erfasst und anschließend zusammengeführt. Der wesentliche Vorteil dieser Maßnahme besteht darin, dass Datenlücken, die beispielsweise aufgrund mangelnden Empfangs der GNSS-Signale in Tunneln oder bei Straßenunterführungen auftreten, signifikant verkürzt werden. Typisch ist hier beispielsweise, dass das Höhensignal auch bereits bei sehr kurzen Tunneln ganz verschwindet und sich erst einige Zeit hinter dem Tunnel wieder aufbaut. Fügt man nun die Höhendaten von zwei Messungen bei unterschiedlicher Fahrtrichtung zusammen, so entfallen lediglich die Höhendaten innerhalb des Tunnels. Die Höhendaten vor und hinter dem Tunnel liegen nach dem Zusammenfügen der Daten dann vor.

Gemäß einer weiteren vorteilhaften Ausführungsvariante werden die Positions- und Höhendaten zumindest auf einer Teilstrecke der Fahrstrecke bei geringer Fahrgeschwindigkeit oder sogar bei angehaltenem Schienenfahrzeug erfasst. Insbesondere in Streckenabschnitten, bei denen der Höhengradient großen Schwankungen unterliegt, ist es vorteilhaft, die Fahrgeschwindigkeit zu reduzieren, um die Genauigkeit der Messdaten zu erhöhen, da die Güte der erfassten Höhendaten mit zunehmender Fahrgeschwindigkeit abnimmt.

Gemäß einer weiteren bevorzugten Ausführungsvariante des erfindungsgemäßen Verfahrens wird die Erfassung der Höhendaten in nicht äquidistanten Abständen der Fahrstrecke in Abhängigkeit vom Maß der Änderung des Höhenprofils durchgeführt, wobei die Messabstände mit zunehmender Änderung des Höhenprofils kleiner gewählt werden. Insbesondere im Bereich großer Änderungen der Höhengradienten, also beispielsweise bei Kuppen oder Wannen, sind kleine Schrittweiten sinnvoll. Entsprechend sind bei ebenen oder mit gleichmäßiger Steigung verlaufenden Streckenabschnitten, bei denen sich der Höhengradient nicht ändert, größere Schrittweiten der Messungen sinnvoll, um die Datenmenge zu reduzieren und damit die Leistungsfähigkeit des Fahrerassistenzsystems zu erhöhen, da redundante Informationen bei der Speicherung und Verarbeitung entfallen.

Auch die Anpassung der Schrittweite der Gradienteninformationen an die Taktung einer Optimierungseinheit des Fahrerassistenzsystems ist vorteilhaft, da sich aufgrund der hohen Trägheit des Zuges der Einfluss des Gradienten auf die Geschwindigkeit des Zuges verlangsamt auswirkt.

Im Normalbetrieb findet im Fahrerassistenzsystem ein immer wiederkehrender Abgleich zwischen realer und simulierter Fahrt bezüglich Ort und Geschwindigkeit in sinnvoll gewählten Intervallen statt. Die Wahl dieser Intervalle berücksichtigt die Trägheit des Gesamtsystems, wobei während des Durchlaufens dieser Intervalle sich die Gradienteninformation als integrale Größe auswirkt, was zur Folge hat, dass eine sinnvoll gewählte räumliche Auflösung sich vorteilhaft auf die gute Berechnung der Fahrempfehlung auswirkt, da die Leistungsfähigkeit des Fahrerassistenzsystems durch die optimale Wahl der Messintervalle erhöht wird.

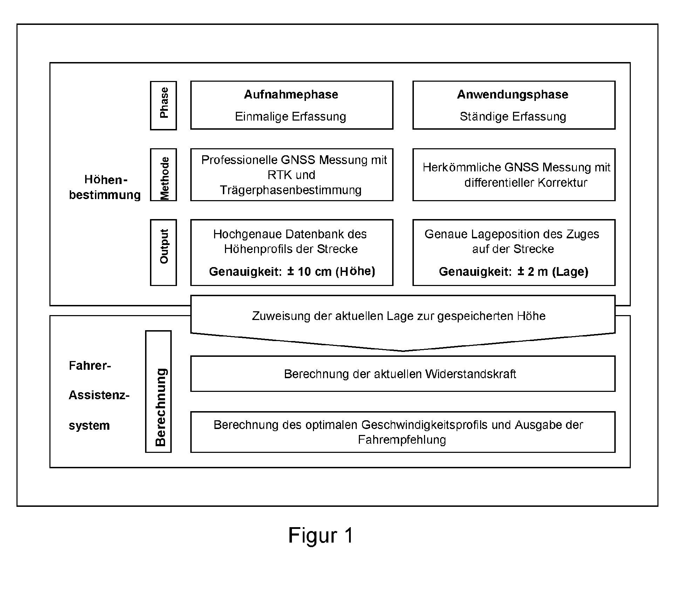

Nachfolgend wird eine bevorzugte Ausführungsvariante des erfindungsgemäßen Verfahrens anhand der einzigen Figur 1 erläutert.

Die einzige Figur 1 zeigt ein Ablaufschema einer Ausführungsvariante des erfindungsgemäßen Verfahrens.

Die Höhenprofilbestimmung einer Fahrstrecke erfolgt zunächst in einer sogenannten Aufnahmephase, bei der das mit dem Empfänger zum Empfang von Signalen eines GNSS ausgestattete Schienenfahrzeug die Fahrstrecke einmalig abfährt und dabei die Höhenprofildaten der Fahrstrecke erfasst.

Während dieser Aufnahmephase wird eine GNSS-Messung durchgeführt, bei der mit Hilfe sogenannter RTK-Netzwerke (RTK = Real Time Kinematic) Höhenmessungen mit einer Genauigkeit von bis zu 2 bis 10 cm erreicht werden. Zur weiteren Erhöhung der Genauigkeit wird zusätzlich die Trägerphase des GNSS-Signals ausgewertet.

Da die Erfassung des Höhengradienten der Fahrstrecke vor allem zur Berechnung der auf ein Schienenfahrzeug ausgeübten Hangabtriebskraft genutzt wird, ist insbesondere auch das Schwerepotential eines Punktes auf der Fahrstrecke von besonderer Bedeutung. Daher wird bevorzugt über eine weitere Datenkorrektur auch die Geoidundulation berücksichtigt, welche für die Berechnung der potenziellen Energie des Schienenfahrzeugs ausschlaggebend ist.

Als Ergebnis dieser hochgenauen Messung erhält man eine hochgenaue Datenbank des Höhenprofils der Fahrstrecke, wobei eine Genauigkeit des Höhenprofils von bis zu 10 cm erreicht wird.

Die in dieser Datenbank enthaltenen Werte werden in einem anschließenden Verfahrensschritt der jeweiligen aktuellen Lageposition des Schienenfahrzeuges bzw. des in dem Schienenfahrzeug angeordneten Empfängers zugeordnet. Diese Datenpakete gehen anschließend in die Berechnung der auf das Schienenfahrzeug wirkenden aktuellen Widerstandskräfte ein. Auf Basis dieser Berechnung kann anschließend eine Berechnung des optimalen Fahrgeschwindigkeitsprofils des Schienenfahrzeugs sowie eine Ausgabe einer Fahrempfehlung für den Lokführer oder Fahrzeugführer des Schienenfahrzeugs durch das Fahrerassistenzsystem ausgegeben werden.

Im späteren Normalbetrieb (Anwendungsphase) erfolgt über den oder die im Schienenfahrzeug installierten Empfänger ebenfalls eine Erfassung der Höhe und Position über eine herkömmliche GNSS-Messung, die jedoch zur Erhöhung der Genauigkeit Daten eines satelittengestützten Differenz-GNSS-Service, beispielsweise des frei verfügbaren europäischen Egnos-Systems, empfängt, wodurch die Genauigkeit der Position des Empfängers gegenüber einer herkömmlichen GNSS-Positionsbestimmung um den Faktor 10 erhöht wird. Als Ergebnis dieser kontinuierlichen Datenerfassung erhält man eine genaue Lageposition des Zuges auf der Strecke mit einer Genauigkeit von etwa 2 m. Die Lageposition wird dann, wie oben bereits beschrieben, mit den in der Aufnahmephase gespeicherten Höhen zusammengeführt, um dann daraus die aktuelle auf das Schienenfahrzeug ausgeübte Widerstandskraft und daraus das optimale Geschwidkeitsprofil berechnet und eine Fahrempfehlung an den Lokführer des Schienenfahrzeugs ausgegeben.

Beim Einsatz des Fahrerassistenzsystems im späteren Normalbetrieb werden in enger zeitlicher Abfolge reale und empfohlene Fahrweisen bezüglich Ort und Geschwindigkeit miteinander verglichen. Unter der Annahme, dass den Fahrempfehlungen des Fahrerassistenzsystems gefolgt wird, besteht so die Möglichkeit, dass reale Fahrverhalten des Zuges mit dem Fahrverhalten der Zugsimulation zu vergleichen. Dadurch besteht die Möglichkeit, die den Simulationsmodell zugrunde liegende Gradienteninformation an die real beobachtete Gradienteninformation anzupassen, wodurch auch die Möglichkeit besteht, dass Fahrerassistenzsystem mit einem selbstlernenden Algorithmus zu versehen.

## Patentansprüche

1. Verfahren zur Höhenprofilbestimmung einer Fahrstrecke eines Schienenfahrzeuges, aufweisend die Verfahrensschritte:
- Erfassen von Positions- und Höhendaten durch einen im Schienenfahrzeug installierten Empfänger eines globalen Navigationssatellitensystems (GNSS) bei mindestens einmaligem Abfahren der Fahrstrecke,
- Erhöhen der Genauigkeit der über das GNSS erhaltenen Höhendaten durch Bestimmung der Trägerphase der Signale des oder der Navigationssatelliten,
- Erhöhen der Genauigkeit der über das GNSS erhaltenen Höhendaten durch differentielle Korrektur der Höhendaten unter Zuhilfenahme eines RTK-Netzwerks,
- Berechnen des Höhenprofilverlaufes der Fahrstrecke durch Verarbeiten der in den vorangegangenen Schritten erfassten Positions- und Höhendaten.

2. Verfahren nach Anspruch 1, wobei in einem weiteren Verfahrensschritt die Genauigkeit der über das GNSS erhaltenen Höhendaten durch Berücksichtigung der Geoidundulation erhöht wird.

3. Verfahren nach Anspruch 1 oder 2, wobei die Positions- und Höhendaten zumindest auf einer Teilstrecke der Fahrstrecke bei unterschiedlichen Fahrtrichtungen erfasst und anschließend zusammengeführt werden.

4. Verfahren nach einem der vorstehenden Ansprüche, wobei die Positions- und Höhendaten zumindest auf einer Teilstrecke der Fahrstrecke bei geringer Fahrgeschwindigkeit erfasst werden.

5. Verfahren nach einem der vorstehenden Ansprüche, wobei die Höhendaten zumindest auf einer Teilstrecke der Fahrstrecke bei angehaltenem Schienenfahrzeug erfasst werden.

6. Verfahren nach einem der vorstehenden Ansprüche, wobei die Erfassung der Höhendaten in äquidistanten Abständen der Fahrstrecke erfolgt.

7. Verfahren nach einem der Ansprüche 1 bis 5, wobei die Erfassung der Höhendaten in nicht äquidistanten Abständen der Fahrstrecke in Abhängigkeit vom Maß der Änderung des Höhenprofils erfolgt, wobei die Messabstände mit zunehmender Änderung des Höhenprofils kleiner gewählt werden.

8. Verfahren nach einem der vorstehenden Ansprüche, wobei die erfassten Höhendaten vor der Berechnung des Höhengradienten einer räumlichen Tiefpassfilterung unterzogen werden.

9. Verfahren zum Betreiben eines Fahrerassistenzsystems eines Schienenfahrzeuges, bei dem zur Ermittlung einer Hangabtriebskraft ein Verfahren gemäß einem der vorstehenden Ansprüche eingesetzt wird, wobei während einer Fahrt durch eine Optimierungseinheit des Fahrerassistenzsystems mit einer bestimmten Taktung ein Vergleich zwischen Soll- und Istwerten verschiedener Daten erfolgt und wobei die Erfassung der Höhendaten in nicht äquidistanten Abständen der Fahrstrecke in Abhängigkeit von der Taktung der Optimierungseinheit erfolgt.

10. Verfahren nach Anspruch 8, wobei in einem weiteren Verfahrensschritt die Genauigkeit der über das GNSS erhaltenen Höhendaten im normalen Fahrbetrieb durch Berücksichtigung von Korrektursignalen eines Differentialsignale aussendenden GNSS erhöht wird.

## Claims

1. Method for determination of the elevation profile of a route of a rail vehicle, comprising the following steps:
- detection of position and elevation data by means of a receiver of a global navigation satellite system (GNSS), which is installed in the rail vehicle, by moving along the route at least once;
- increase of the precision of the elevation data obtained via the GNSS system by determination of the carrier phase of the signal of the navigation satellite or satellites,
- increase of the precision of the elevation data obtained via the GNSS system by differential correction of the elevation data with the help of an RTK network,
- computation of the development of the elevation profile of the route by processing the position and elevation data detected in the preceding steps.

2. Method according to Claim 1, wherein, in a further step, the precision of the elevation data obtained via the GNSS system is increased by consideration of the geoid undulation.

3. Method according to Claim 1 or 2, wherein the position and elevation data is detected at least along a section of the route with different directions of movement and is subsequently collated.

4. Method according to any of the preceding Claims, wherein the position and elevation data is detected at least along a section of the route at a low travel speed.

5. Method according to any of the preceding Claims, wherein the elevation data is detected at least along a section of the route with the rail vehicle in stopped condition.

6. Method according to any of the preceding Claims, wherein the detection of the elevation data is performed in equidistant distances along the route.

7. Method according to any of the Claims 1 to 5, wherein the detection of the elevation data is performed in non-equidistant distances along the route as a function of the degree of change of the elevation profile, with the measuring distances being chosen to be smaller as the elevation profile change increases.

8. Method according to any of the preceding Claims, wherein the detected elevation data is subjected to three-dimensional low-pass filtering prior to the computation of the elevation gradient.

9. Method of operating a driver assistance system of a rail vehicle, in which a method according to any of the preceding Claims is employed for determination of a slope downward force, wherein during a travel a comparison between set and actual values of different data is performed by an optimizer unit of said driver assistance system with a defined timing, and wherein the detection of the elevation data is performed in non-equidistance distances along the route as a function of the timing of said optimizer unit.

10. Method according to Claim 8, wherein, in a further step, the precision of the elevation data obtained via the GNSS system is increased in regular vehicle operation by consideration of correction signals of a GNSS system transmitting differential signals.

## Revendications

1. Procédé à déterminer le profil en hauteur d'un trajet d'un véhicule ferroviaire, comprenant les étapes suivantes :
- détection des données de position et d'hauteur moyennant un récepteur d'un système à satellite de navigation global (GNSS), qui est installé au bord du véhicule ferroviaire, par mouvement le long du trajet au moins une foi ;
- augmentation de la précision des données d'hauteur obtenues via le système GNSS par détermination de la phase porteuse du signal du satellite ou des satellites de navigation,
- augmentation de la précision des données d'hauteur obtenues via le système GNSS par correction différentielle à l'aide d'un réseau RTK,
- calcul du développement du profil en hauteur du trajet par traitement des données de position et d'hauteur détectées dans les étapes précédentes.

2. Procédé selon la revendication 1, dans lequel, dans une étape additionnelle, la précision des données d'hauteur obtenues via le système GNSS est augmentée par considération de l'ondulation du géoïde.

3. Procédé selon la revendication 1 ou 2, dans lequel les données de position et d'hauteur sont détectées au moins le long d'un tronçon partiel du trajet aux directions différentes de mouvement, et sont ensuite réunies.

4. Procédé selon une quelconque des revendications précédentes, dans lequel les données de position et d'hauteur sont détectées au moins le long d'un tronçon partiel du trajet à une petite vitesse de conduite.

5. Procédé selon une quelconque des revendications précédentes, dans lequel les données d'hauteur sont détectées au moins le long d'un tronçon partiel du trajet au véhicule ferroviaire en état d'arrêt.

6. Procédé selon une quelconque des revendications précédentes, dans lequel la détection des données d'hauteur est réalisée à distances équidistantes le long du trajet.

7. Procédé selon une quelconque des revendications 1 à 5, dans lequel la détection des données d'hauteur est réalisée à distances non équidistantes le long du trajet en fonction du degré de changement du profil en hauteur, aux distances de mesure étant choisies de façon qu'elles soient le plus courtes, le plus fortement s'augmente le changement du profil en hauteur.

8. Procédé selon une quelconque des revendications précédentes, dans lequel les données d'hauteur détectées sont soumises à un filtrage passe-bas tridimensionnel avant le calcul du gradient d'hauteur.

9. Procédé à opérer un système d'assistance au conducteur d'un véhicule ferroviaire, dans lequel on applique un procédé selon une quelconque des revendications précédentes pour la détermination d'une force descensionnelle, dans lequel, pendant une tournée, on réalise une comparaison entre des valeurs de consigne et des valeurs réelles des données différentes moyennant une unité d'optimisation dudit système d'assistance au conducteur à une cadence définie, et dans lequel la détection des données d'hauteur est réalisée aux distances non équidistantes le long du trajet en fonction de la cadence de ladite unité d'optimisation.

10. Procédé selon la revendication 8, dans lequel, dans une étape additionnelle, la précision des données d'hauteur obtenues via le système GNSS est augmentée en opération de tournée normale par considération des signaux de correction d'un système GNSS, qui émet des signaux différentiels.
